**Europäisches Patentamt**

**European Patent Office**

**Office européen des brevets**

(19)

(11) Veröffentlichungsnummer: **0 132 260**
**B1**

(12) **EUROPÄISCHE PATENTSCHRIFT**

(45) Veröffentlichungstag der Patentschrift:
**22.07.87**

(21) Anmeldenummer: **84900379.3**

(22) Anmeldetag: **13.01.84**

(86) Internationale Anmeldenummer:
**PCT/CH 84/00007**

(87) Internationale Veröffentlichungsnummer:
**WO 84/02771 (19.07.84 Gazette 84/17)**

(51) Int. Cl.⁴: **G 01 B 11/16,** G 01 D 5/28,
E 21 F 17/18, G 01 S 17/46

(54) **VORRICHTUNG ZUM FESTSTELLEN EINER RELATIVEN DISTANZÄNDERUNG ZWISCHEN ZWEI MESSSTELLEN UND VERWENDUNG DERSELBEN.**

(30) Priorität: **13.01.83 CH 182/83**

(43) Veröffentlichungstag der Anmeldung:
**30.01.85 Patentblatt 85/5**

(45) Bekanntmachung des Hinweises auf die Patenterteilung:
**22.07.87 Patentblatt 87/30**

(84) Benannte Vertragsstaaten:
**AT BE CH DE FR GB LI LU NL SE**

(56) Entgegenhaltungen:
**EP-A-0 082 525**
**DE-A-494 957**
**FR-A-2 082 173**
**FR-A-2 170 127**

(73) Patentinhaber: **AMBERG MESSTECHNIK AG, Rheinstrasse 4, CH- 7320 Sargans (CH)**

(72) Erfinder: **AMBERG, Rudolf, Sixer 6, CH- 7320 Sargans (CH)**
Erfinder: **ALDER, Werner, Castelsrietweg 4, CH- 7320 Sargans (CH)**

(74) Vertreter: **White, William, PATENTANWALTS-BUREAU ISLER AG Postfach 6940 Walchestrasse 23, CH- 8023 Zürich (CH)**

EP 0 132 260 B1

## Beschreibung

Die vorliegende Erfindung betrifft eine Vorrichtung zum Feststellen einer relativen Distanzänderung zwischen zwei Meßstellen gemäss dem Oberbegriff des unabhängigen Patentanspruchs 1 sowie eine Verwendung dieser Vorrichtung gemäss dem Gattungsbegriff des unabhängigen Patentanspruchs 8.

Aus der CH-A 278 632 ist es bekannt, dass bei Hochbauten, wie beispielsweise bei Türmen oder Talsperren, die Möglichkeit besteht, dass sich ein Punkt des Bauwerkes horizontal verschiebt. Diese horizontale Verschiebung wird in zwei zueinander senkrecht stehende Komponenten zerlegt, die als bedeutsam angesehen werden. Von diesen ist eine wichtige Komponente diejenige, die senkrecht auf einer vertikalen Ebene steht, somit diejenige, die ein Kippen des Bauwerkes anzuzeigen vermag. Dementsprechend wird vorgeschlagen, in der genannten vertikalen Ebene ein Pendel aufzuhängen und die Veränderung des Abstandes zwischen Bauwerk und Faden zu messen.

Anderseits ist es aus der CH-A 366 982 bekannt geworden, die Distanz durch doppelte Abbildung, z. B. einer Messlatte, zu bestimmen.

Ein Vorschlag zur Feststellung der Verschiebungen einer Stelle findet sich in der FR-A-2 170 127. Hier ist ein Spiegel an einem Pendel befestigt, um die Bewegung von dessen Aufhängestelle mittels eines Laserstrahles festzustellen. Die Richtung des Pendels soll durch einen Kreisel in ihrer ursprünglichen Lage festgehalten bleiben. Zur Abschwächung unvermeidlicher Nutationsbewegungen steckt das Ende des Pendels in einer Dämpferanordnung. Für grosse Hohlraumbauten wie Tunnels und Kavernen und für Messungen über längere Zeit ist eine solche Anordnung ungeeignet, weil sich ein Gleichgewicht zwischen einer durch den Kreisel bestimmten ursprünglichen Richtung und der Erdanziehung einstellt, so dass eine mögliche Verschiebung nur momentan feststellbar sein kann.

Es hat sich jedoch, insbesondere im Bergbau gezeigt, dass eine dauernde Überwachung der Wände von Hohlräumen im Gebirge notwendig ist, um feststellen zu können, wann das Gebirge wieder zur Ruhe gekommen ist. Deshalb genügt es nicht, die Verschiebung in nur einer Richtung festzustellen, sondern es sollten alle drei Koordinaten im räumlichen kartesischen Koordinatensystem beobachtet werden, um damit alle möglichen Verschiebungen, Ausbauchungen und Verwerfungen feststellen zu können.

Es ist deshalb eine Aufgabe der Erfindung, eine Vorrichtung zu schaffen, mit der solche Bewegungen von Bauten erfasst werden können, wobei besonders der Fall berücksichtigt werden soll, dass sich nicht nur eine Bautenwand, sondern auch die Bezugsstelle bewegen könnte.

Erfindungsgemäss wird dies mit einer Vorrichtung erreicht, die durch die Merkmale im kennzeichnenden Teil des unabhängigen Patentanspruchs 1 gekennzeichnet ist. Eine besonders vorteilhafte Anwendung ist im unabhängigen Patentanspruch 8 definiert.

Ausführungsbeispiele der Erfindung werden nachfolgend anhand der Zeichnung beschrieben. Es zeigen:

Fig. 1 eine geometrische Darstellung zur Erläuterung des Prinzips der Erfindung,

Fig. 2 eine schematische Darstellung einer ersten einfachen Ausführungsform, und

Fig. 3 eine schematische Darstellung einer zweiten universell anwendbaren Ausführungsform.

Das Hauptproblem besteht in der Schaffung genügend grosser Ausschläge bei schon kleinen Veränderungen, um leicht zu verwendbaren Messresultaten zu kommen. Bauten, seien dies Hochbauten oder Hohlraumbauten, können sich, wie eingangs erwähnt, in verschiedenen Richtungen veränderm. Das Messsystem muss daher in der Lage sein, selbsttätig die Zerlegung in Komponenten vorzunehmen. Eine Komponente soll sich zur Vermessung eignen.

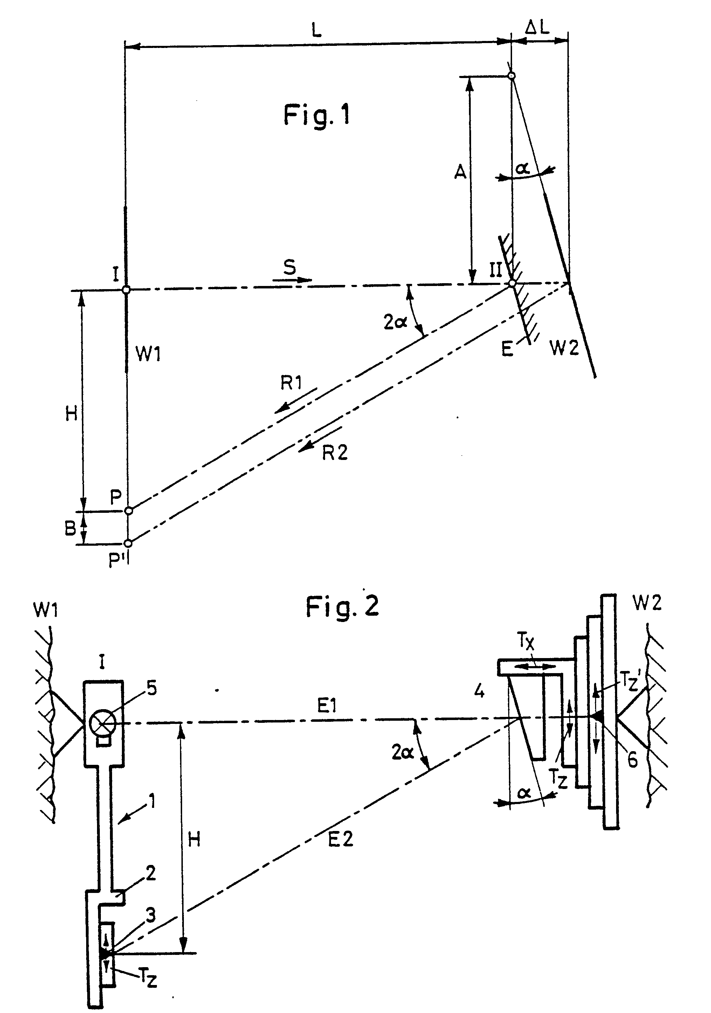

Wie dies in Fig. 1 dargestellt ist, sind zwei Meßstellen I und II als Punkte auf der Oberfläche von zwei sich gegenüberstehenden Wänden W1, W2 definiert. Von der Meßstelle I wird ein Lichtstrahl S senkrecht abgestrahlt und trifft senkrecht auf die Wand W2 in der Meßstelle II auf.

An der Meßstelle II befindet sich ein ebener Spiegel E. Von diesem Spiegel E wird der Lichtstrahl S als Reflexionsstrahl R1 zurückgestrahlt. Im Empfangspunkt P trifft der Reflexionsstrahl R1 wieder auf die Wand WI mit der Meßstelle I auf. Sofern die Wand W1 unverändert bleibt, kann eine Verschiebung der Wand W2 um den Betrag $\Delta L$ festgestellt werden, weil sich der Empfangspunkt für den Reflexionsstrahl R2 verschoben hat, und zwar um den Betrag B zum Punkt P'.

Wenn der Winkel zwischen einfallendem Lichtstrahl S und Reflexionsstrahl R1 am Spiegel E mit $2\alpha$ bezeichnet wird, dann ist der Winkel im Scheitel Q zwischen der Ebene der Wand W2 und der verlängerten, um $\Delta L$ verschobenen Spiegelebene mit $\alpha$ zu bezeichnen, wie leicht aus dem Satz der paarweise senkrecht aufeinanderstehenden Schenkel hergeleitet werden kann.

Somit entspricht eine Verschiebung um den Betrag A dem Wert $\Delta L/\tan\alpha$ und die gemessene Verschiebung B entspricht demgemäss $\Delta L.\tan 2\alpha$. Somit muss lediglich darauf geachtet werden, dass sich die Messbasis an der Meßstelle I nicht verändert, um damit jede beliebige Veränderung zwischen den beiden Wänden W1 und W2 feststellen zu können.

Erfindungsgemäss wird dies durch ein kardanisch aufgehängtes Pendel erreicht, bei dem eine Lichtquelle in der Aufhängung und ein Lichtempfänger bei der Pendelmasse angeordnet ist. Die Messbasis ist dann immer auf den Erdmittelpunkt ausgerichtet und somit

unveränderlich.

Im ersten Ausführungsbeispiel nach Fig. 2 sind die Wände W1 und W2 zwei sich gegenüberstehende parallele Felswände einer Hohlraumbaute. An der Wand W1 ist ein Pendel 1 kardanisch bei der Meßstelle I aufgehängt. An der Pendelmasse 2 befindet sich ein verschiebbarer Lichtempfänger 3, um aufgrund der Verschiebung die Veränderung zahlenmässig erfassen zu können.

An der gegenüberliegenden Wand W2 befindet sich ein Spiegel 4, dessen Spiegelebene gegenüber einer vertikalen Ebene um einen Winkel α geneigt ist. Ein horizontal von der Lichtquelle 5 abgestrahlter Lichtstrahl E1 wird an der Spiegelebene des Spiegels 4 reflektiert und als Reflexionsstrahl E2 zum Empfänger 3 zurückgeworfen. Der Winkel zwischen einfallendem Lichtstrahl E1 und Reflexionsstrahl E2 ist somit 2α.

Eine Veränderung des Spiegels 4 in Richtung $T_x$ ergibt eine Auslenkung in Richtung $T_z$ im Lichtempfänger 3 und dieselbe Auslenkung wird auch durch eine Veränderung in Richtung $T_z$ erhalten. Diese beiden Auslenkungen lassen sich mit einem totalreflektierenden Spiegel nicht unterscheiden.

Wenn der Spiegel 4 halbdurchlässig ist, kann hinter dem Spiegel 4 ein zweiter Lichtempfänger 6 angeordnet werden, der dann seinerseits den durch den Spiegel 4 hindurchgehenden Teilstrahl detektiert und eine Information $T_z$, über eine Verschiebung in Z-Richtung erzeugt.

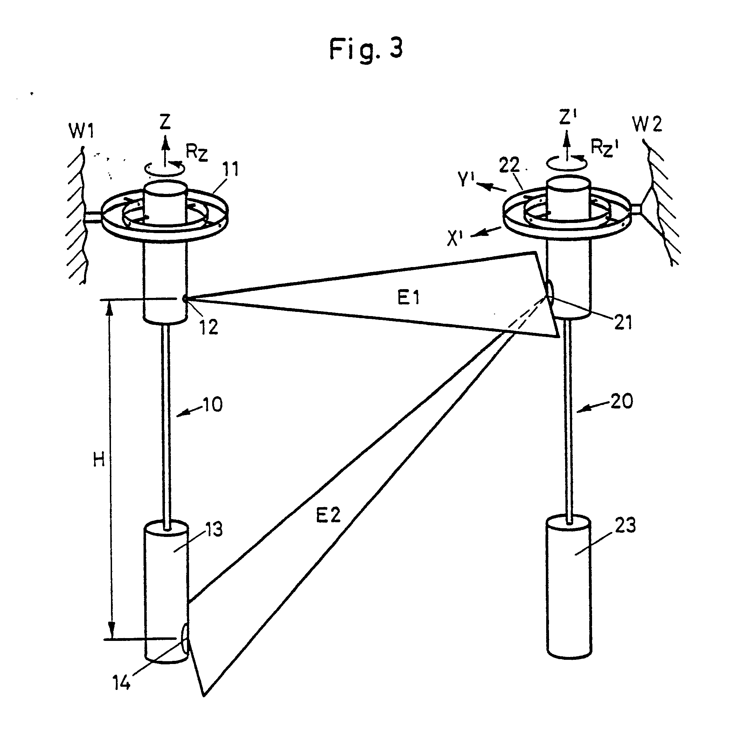

Schliesslich ist noch in Fig. 3 eine zweite Ausführungsform zur Erfassung von Lageveränderungen in der durch die beiden Pendelachsen aufgespannten Messebene mit ihren Komponenten in X- und Z-Richtung dargestellt.

Dazu ist an der Wand W1 links in der Zeichnung ein erstes Pendel 10 in einer kardanischen Aufhängung 11 gehaltert. Mit der kardanischen Aufhängung 11 ist ein Lichtsender 12 zusammengebaut. In der Pendelmasse 13 befindet sich der Lichtempfänger 14. Der Lichtsender 12 ist mit einer Einrichtung versehen die eine Lichtebene senkrecht zur Z-Achse bildet.

Damit wird eine Ebene E1 bestimmt, die bei Verschiebung des Reflektors 21 an der gegenüberliegenden Wand W2 in X'- oder Y'-Richtung einen Reflexionsstrahl erzeugen kann. Der Reflektor 21 ist ebenfalls in einer kardanischen Aufhängung 22 an der Wand W2 gehaltert und bildet die Lagerpartie eines zweiten Pendels 20, das lediglich mit einem Gewicht als Pendelmasse 23 ausgerüstet ist. Der Reflektor 21 reflektiert das Licht des ihm in der Lichtebene E1 zugeführten Lichtes. Damit erzeugen die auftreffenden Strahlen in der Ebene E1 eine zweite Ebene E2 mit reflektierten Strahlen.

Eine solche Anordnung erlaubt das Feststellen von Distanzänderungen bezüglich der gegenseitigen Lage der beiden Wände W1 und W2. Zur Vermessung der Distanzänderungen können im Lichtempfänger beispielsweise Photozellen rasterartig angeordnet werden, um aus der Lage des auftreffenden reflektierten Strahles beim Empfänger 14 eine Information über das Mass der Verschiebung zu erzeugen.

Durch eine zusätzliche Rotation des Lichtsenders 12 um die Z-Achse können mehrere Reflektoren an der Wand W2, die in der Ebene E1 liegen, angestrahlt werden, und die Überwachung einer Veränderung kann damit über eine grössere Länge der Wände durchgeführt werden.

Selbstverständlich liesse sich auch das Prinzip gemäss Fig. 1 umkehren, indem bei der Meßstelle I ein Lichtstrahl mit der Richtung von I nach P erzeugt wird. Beim Punkt I ist ein halbdurchlässiger Spiegel unter 45° zu dieser Richtung und in Punkt P ein total reflektierender Spiegel unter 45° + 2 α zu dieser Richtung am Pendel befestigt. An der Meßstelle II wird dann in gleicher Weise eine Veränderung infolge der Verschiebung der Strahlen R1, R2 feststellbar sein.

**Patentansprüche**

1. Vorrichtung zum Feststellen einer Distanzänderung zwischen 2 Meßstellen (I, II) durch Aussenden eines Lichtstrahles (S) an einer ersten Meßstelle (I), Reflektieren des Lichtstrahles an einer zweiten Meßstelle (II) und Feststellen einer allfälligen Veränderung (ΔL), dadurch gekennzeichnet, dass wenigstens bei der ersten Meßstelle (I) ein erstes kardanisch (11) aufgehängtes Pendel (10) vorhanden ist, bei dem der Lichtsender (5, 12) bei der Aufhängung (11) und der Lichtempfänger (3, 14) oder ein Lichtreflektor am freien Ende des Pendels angeordnet sind.

2. Vorrichtung nach Patentanspruch 1, in der ein Lichtreflektor am freien Ende des Pendels (10) angeordnet ist, dadurch gekennzeichnet, dass der Reflektor eine schiefwinklig auf der optischen Achse des Lichtsenders (5, 12) stehende Spiegelebene ist.

3. Vorrichtung nach Patentanspruch 2, dadurch gekennzeichnet, dass der Reflektor als halbdurchlässiger Spiegel ausgebildet ist und dass hinter der genannten Spiegelebene eine wenigstens angenähert senkrecht auf der optischen Achse stehende Bildebene vorhanden ist.

4. Vorrichtung nach Patentanspruch 1, dadurch gekennzeichnet, dass bei der zweiten Meßstelle (II) ein zweites kardanisch aufgehängtes Pendel (20) vorhanden ist und dass der Reflektor (21) an einer Stelle zwischen der kardanischen Aufhängung (22) und der Masse (23) dieses zweiten Pendels angeordnet ist.

5. Vorrichtung nach Patentanspruch 4, dadurch gekennzeichnet, dass der Reflektor (21) masseseitig der kardanischen Aufhängung (22) am Lagerkörper angeordnet ist.

6. Vorrichtung nach Patentanspruch 5, dadurch gekennzeichnet, dass sowohl der senderseitig abgestrahlte Lichtstrahl als auch der reflektorseitig abgestrahlte Lichtstrahl eine Strahlenebene ($E_1$, $E_2$) bilden.

7. Vorrichtung nach Patentanspruch 6, dadurch gekennzeichnet, dass die Strahlenebenen ($E_1$, $E_2$) durch Bewegen der Lichtquelle (12) und des Reflektors (21) um eine entsprechende vertikale Achse erzeugt sind.

8. Verwendung der Vorrichtung nach Patentanspruch 1 zur Feststellung der Veränderung von Wänden ($W_1$, $W_2$) von Hohlräumen im Gebirge.

9. Verwendung nach Patentanspruch 8, dadurch gekennzeichnet, dass mit dem Lichtsender (12) durch Rotation um die durch das erste Pendel (10) bestimmte vertikale Achse eine horizontale Ebene ($E_1$) bestimmt wird, und dass mehrere, im Abstand voneinander angeordnete Reflektoren (21) ebenfalls an kardanisch aufgehängten Pendeln (20) zur Reflexion des Lichtstrahls vorhanden sind, um gleichzeitig das Verhalten der Hohlraumwände über eine grössere Strecke beobachten zu können.

## Claims

1. A device for determining a change in the distance between two measuring points (I, II) by transmitting a light beam (S) to a first measuring point (I), reflecting the beam to a second measuring point (II) and determining any change ($\Delta$L), characterised in that a first gimbal (11) - suspended pendulum (10) is present at least at the first measuring point (I), the associated light transmitter (5, 12) being disposed at the suspension, and the light receiver (3, 14) or a light reflector being disposed at the free end of the pendulum.

2. A device according to Claim 1, in which a light reflector is disposed at the free end of the pendulum (10), characterised in that the reflector is a mirror surface plane at an oblique angle on the optical axis of the light transmitter (5, 12).

3. A device according to Claim 2, characterised in that the reflector is constructed as a semipermeable mirror and an image plane is present behind the aforementioned mirror plane and is at least approximately perpendicular on the optical axis.

4. A device according to Claim 1, characterised in that a second gimbal-suspended pendulum (20) is present at the second measuring point (II) and the reflector (21) is disposed at a place between the gimbal suspension (22) and the bob (23) of the second pendulum,

5. A device according to Claim 4, characterised in that the reflector (21) is disposed on the bearing member at the bob end of the gimbal suspension (22).

6. A device according to Claim 5, characterised in that the light beam from the transmitter and the light beam from the reflector each form a plane ($E_1$, $E_2$).

7. A device according to Claim 6, chacterised in that the beam planes ($E_1$, $E_2$) are produced by moving the light source (12) and the reflector (21) round a corresponding vertical axis.

8. Use of the device according to Claim 1 for determining changes in the walls ($W_1$, $W_2$) of cavities in rocks.

9. Use according to Claim 8, characterised in that the light transmitter (12) is rotated round the vertical axis defined by the first pendulum (10) so as to define a horizontal plane ($E_1$), and a number of spaced-apart reflectors (21) likewise on gimbal-suspended pendulums (20) are present for reflecting the light beam, in order to observe the behaviour of the cavity walls simultaneously over a greater distance.

## Revendications

1. Dispositif pour déterminer une variation de distance entre deux points de mesure (I, II) en émettant un faisceau lumineux (S) en un premier point de mesure (I), en réfléchissant le faisceau lumineux en un second point de mesure (II) et en déterminant une variation éventuelle ($\Delta$L) caractérisé en ce qu'on prévoit, au moins au premier point de mesure (I), un premier pendule (10) suspendu au moyen d'une suspension à la Cardan (11), dans lequel l'émetteur de lumière (5, 12) est placé sur la suspension (11) et le récepteur de lumière (3, 14) ou un réflecteur de lumière l'extrémité libre du pendule.

2. Dispositif selon la revendication 1, dans lequel un réflecteur de lumière est placé à l'extrémité libre du pendule (10), caractérisé en ce que le réflecteur est une surface de miroir plane faisant un angle oblique avec l'axe optique de l'émetteur de lumière (5, 12).

3. Dispositif selon la revendication 2, caractérisé en ce que le réflecteur est réalisé sous la forme d'un miroir semi-transparent, et en ce qu'un plan focal est placé au moins approximativement perpendiculairement à l'axe optique derrière ladite surface plane de miroir.

4. Dispositif selon la revendication 1, caractérisé en ce qu'au second point de mesure (II), on prévoit un second pendule (20) suspendu à la Cardan, et en ce que le réflecteur (21) est placé en un point situé entre la suspension à la Cardan (22) et la masse (23) de ce second pendule.

5. Dispositif selon la revendication 4, caractérisé en ce que le réflecteur (21) est placé sur le corps d'appui, du côté de la masse par rapport à la suspension à la Cardan (22).

6. Dispositif selon la revendication 5, caractérisé en ce que le faisceau lumineux émis côté émetteur et le faisceau lumineux émis côté réflecteur forment tous deux un plan de rayonnement (E1, E2).

7. Dispositif selon la revendication 6, caractérisé en ce que les plans de rayonnement

(E1 - E2) sont produits par déplacement de la source lumineuse (12) et du réflecteur (21) autour d'un axe vertical correspondant.

8. Application du dispositif selon la revendication 1 à la détermination du déplacement de parois (W1, W2) de cavités dans le massif rocheux.

9. Application selon la revendication 8, caractérisé en ce qu'on détermine avec l'émetteur de lumière (12), par rotation autour de l'axe vertical déterminé par le premier pendule (10), un plan horizontal (E1), et en ce qu'on prévoit plusieurs réflecteurs (21) placés à distance mutuelle, également sur des pendules (20) suspendus à la Cardan, pour la réflexion du faisceau lumineux, pour pouvoir observer en même temps le comportement des parois de la cavité sur un plus grand intervalle.

Fig. 1

Fig. 2

1

## Fig. 3